# EUROPEAN PATENT SPECIFICATION

(11) **EP 3 925 869 B1**
(45) Date of publication and mention of the grant of the patent: **03.05.2023**
(21) Application number: 21173366.2
(22) Date of filing: 11.05.2021
(51) Int. Cl.: B62J 17/02, B62J 45/42

(54) **STRADDLED VEHICLE COMMUNICATION AND ENGINE CONTROL UNITS**
KOMMUNIKATIONS- UND MOTORSTEUERGERÄTE EINES GRÄTSCHSITZFAHRZEUGES
UNITÉS DE COMMUNICATION ET DE CONTRLE MOTEUR D'UN VÉHICULE À ENFOURCHER

(30) Priority: 19.06.2020 JP 2020106181
(43) Date of publication of application: 22.12.2021
(73) Proprietor: YAMAHA HATSUDOKI KABUSHIKI KAISHA, Iwata-shi, Shizuoka 438-8501 (JP)
(72) Inventor: TAKIGUCHI, Shota, Shizuoka-ken, 4388501 (JP)
(74) Representative: Marks & Clerk LLP

(56) References cited:
- WO-A1-2019/150495
- JP-A- 2011 183 999
- JP-A- 2013 071 566
- JP-B2- 4 835 239

## Description

### FIELD OF INVENTION

The present invention relates to a straddled vehicle, straddle-type vehicle or saddle-ride type vehicle.

### BACKGROUND TO INVENTION

A type of straddled vehicle including a communication device communicable with a portable communication terminal is known (see Publication of Japan Patent No. 4835239 (SUZUKI MOTOR CORPORATION)). The communication device is disposed inside an exterior cover covering a head pipe from a lateral side. In the straddled vehicle described in Publication of Japan Patent No. 4835239, the communication device is mounted onto an engine control unit.

The straddled vehicle, including the communication device and the engine control unit, has been demanded to simultaneously achieve compactness in size thereof and enhancement in theft prevention performance of the communication device.

It is an object of one or more embodiments of one or more aspects of the present invention to seek to obviate or mitigate one or more problems or disadvantages in the prior art.

It is an object of one or more embodiments of one or more aspects of the present invention to seek to enable a straddled vehicle to simultaneously achieve compactness in size thereof and enhancement in theft prevention performance of a communication device.

JP 2011/183999 A (HONDA MOTOR CO LTD) describes a motorcycle including a vehicle body frame; a head pipe included in the vehicle body frame; a steering shaft insertedly fitted into the head pipe; a steering handle disposed at the upper end of the steering shaft; and a front vehicle body cover for covering the head pipe which is disposed around the head pipe. The front vehicle body cover includes the article storage box formed swellingly toward the front of the vehicle. A flat surface 81 substantially horizontal to an external surface of the article storage box is formed. The anti-theft device is attached to the flat surface.

WO 2019/150495 A1 (HONDA MOTOR CO LTD) describes a saddle riding type vehicle in which a cover member of an accommodation part can be unlocked by using a foot switch operated by foot without operating a portable wireless key. The invention is provided with: a smart key authenticated through wireless communication by a control unit provided in a saddle riding type vehicle; a locking mechanism that locks or unlocks a cover member; an unlocking operation unit that transmits an unlock signal to the control unit; and an actuator connected to the locking mechanism and operated according to a command from the control unit. The unlocking operation unit is disposed at a position that is higher than a lowest ground height of a saddle riding type vehicle and lower than a hinge mechanism of a seat. The control unit operates an actuator to switch the locking mechanism to an unlocked state, when the unlock signal is transmitted by operating the unlocking operation unit and mutual authentication with the smart key is completed.

JP 2013/071566 A (HONDA MOTOR CO LTD) describes a mobile terminal storage structure for a motorcycle including a cellular phone storage part for storing the cellular phone therein, the cellular phone storage part for storing the cellular phone to be capable of being supplied with power is arranged in the vicinity of an ignition switch device for turning on/off a circuit connected to a load from a battery of the motorcycle.

JP 4835239 B2 (SUZUKI MOTOR CO) describes An electronic authentication system including a vehicle side control unit for determining whether or not the ID information of an electronic key is matched with ID information on the motorcycle side, an ignition switch unit for enabling engine starting operation and handlebar unlocking operation according to the matching of the ID information of the electronic key with ID information on the motorcycle side, and an unlocking actuator of an opening/closing lid such as a storage lid, and these components are mounted and fixed to a leg shield (a leg shield inner), and modulated.

### SUMMARY OF INVENTION

According to the present invention there is provided a straddled vehicle according to the independent claims appended hereto. Some optional and/or preferred features are defined in the dependent claims.

According to a first aspect of the present invention there is provided a straddled vehicle comprising: a vehicle body frame comprising a head pipe; an engine supported by the vehicle body frame; an exterior cover covering the head pipe from one lateral side; a support member made of resin, the support member disposed inside the exterior cover and fixed to the vehicle body frame; a communication device disposed between the exterior cover and the support member, the communication device communicable with a portable communication terminal; a holder made of resin, the holder comprising an opening facing an inner side in a vehicle width direction and fixed to the support member inside the exterior cover so as to cover surroundings of the communication device, the holder holding the communication device;
an engine control unit disposed between the communication device and the support member, the engine control unit controlling the engine; wherein the communication device and the engine control unit are each smaller in a dimension corresponding to the vehicle width direction than in each of dimensions corresponding to a vehicle back-and-forth direction and a vehicle up-and-down direction; and the communication device overlaps the engine control unit as seen in a vehicle side view.

Besides, the holder may comprise or include the opening facing the inner side in the vehicle width direction. Hence, the communication device can be disposed in a position close to a/the center of the vehicle in the vehicle width direction. Because of this, even when the communication device and the engine control unit may be disposed to overlap each other in the vehicle width direction, the vehicle can be made compact in size. Moreover, the holder may be fixed to the support member inside the exterior cover so as to cover the surroundings of the communication device. Hence, the communication device can be enhanced in theft prevention performance. Furthermore, the engine control unit may be disposed between the communication device and the support member. Hence, the engine control unit can be enhanced in theft prevention performance. Still furthermore, the engine control unit, having relatively heavy weight, may be disposed in a position closer to the center of the vehicle than the communication device in the vehicle width direction. Hence, the vehicle may be enhanced in stability during traveling.

The engine control unit may comprise or include a first connector portion oriented in a direction different from the vehicle width direction. The holder may cover the first connector portion from an outer side in the vehicle width direction. In this case, a cable, connected to the first connector portion of the engine control unit, may be prevented from being easily disconnected therefrom by external work. Hence, the engine control unit may be further enhanced in theft prevention performance.

The communication device may further comprise or include a second connector portion which may be oriented in a direction opposite to the direction in which the first connector portion is oriented. In this case, the connector of the communication device and that of the engine control unit may be oriented in (the) directions opposite to each other. Hence, wiring work may be made easy at both the connectors.

The holder may comprise or include a plurality of presser portions preventing the communication device from coming off from the opening. In this case, the communication device may be held by the presser portions of the holder made of resin not by those of a metallic member. Hence, the communication device can be maintained in a good communication status.

The straddled vehicle may further comprise or include at least one shock absorbing material. The at least one shock absorbing material may be disposed between the communication device and the holder and may inhibit vibration transferred from the holder to the communication device. In this case, with the at least one shock absorbing material, vibration can be inhibited from being transferred from the holder to the communication device.

The holder may further comprise or include a guide portion which may guide an electric cable disposed about the holder. In this case, the electric cable can be guided by the guide portion.

The holder may comprise or include a sidewall which may extend in the vehicle width direction. The sidewall may be provided with a hole for fixing an electric cable disposed about the holder by a clamp. In this case, the electric cable can be guided by clamping.

The straddled vehicle may further comprise or include a battery which may be disposed to overlap the holder as seen in a vehicle plan view. The support member may comprise or include a mount portion to which the battery may be mounted. In this case, the vehicle can be made compact in size.

Overall, according to the present invention, a straddled vehicle may be enabled to simultaneously achieve compactness in size thereof and enhancement in theft prevention performance of a communication device.

### BRIEF DESCRIPTION OF DRAWINGS

One or more embodiments of the present invention will now be described, by way of example only, and with reference to the accompanying drawings, which are:
- **FIG. 1**: a left side view of a straddled vehicle;
- **FIG. 2**: a top view of the straddled vehicle;
- **FIG. 3**: a block diagram for explaining devices connected to a communication device;
- **FIG. 4**: a perspective view of the communication device and the surroundings thereof as seen from front in a condition that a vehicle body cover is detached from the straddled vehicle;
- **FIG. 5**: a perspective view of the communication device and the surroundings thereof as seen from behind in the condition that the vehicle body cover is detached from the straddled vehicle;
- **FIG. 6**: a side view of the communication device and the surroundings thereof as seen from a left lateral side in the condition that the vehicle body cover is detached from the straddled vehicle;
- **FIG. 7**: a side view of the communication device and the surroundings thereof as seen from the left lateral side in a condition that the vehicle body cover and a holder are detached from the straddled vehicle;
- **FIG. 8**: a view of the communication device and the holder as seen from an inner side in a vehicle width direction;
- **FIG. 9**: a perspective view of the holder; and
- **FIG. 10**: a top view of the communication device and the surroundings thereof in the condition that the vehicle body cover is detached from the straddled vehicle.

### DETAILED DESCRIPTION OF DRAWINGS

A preferred embodiment of a straddled vehicle according to an aspect of the present invention will be hereinafter explained with reference to drawings. It should be noted that in the following explanation, terms indicating such directions as "back and forth", "up and down" and "right and left" are explained based on directions seen from a rider in operation of a straddled vehicle 100. Besides, the term "outer side in a vehicle width direction" means a side far from the center of the straddled vehicle 100 in the vehicle width direction. By contrast, the term "inner side in the vehicle width direction" means a side near to the center of the straddled vehicle 100 in the vehicle width direction.

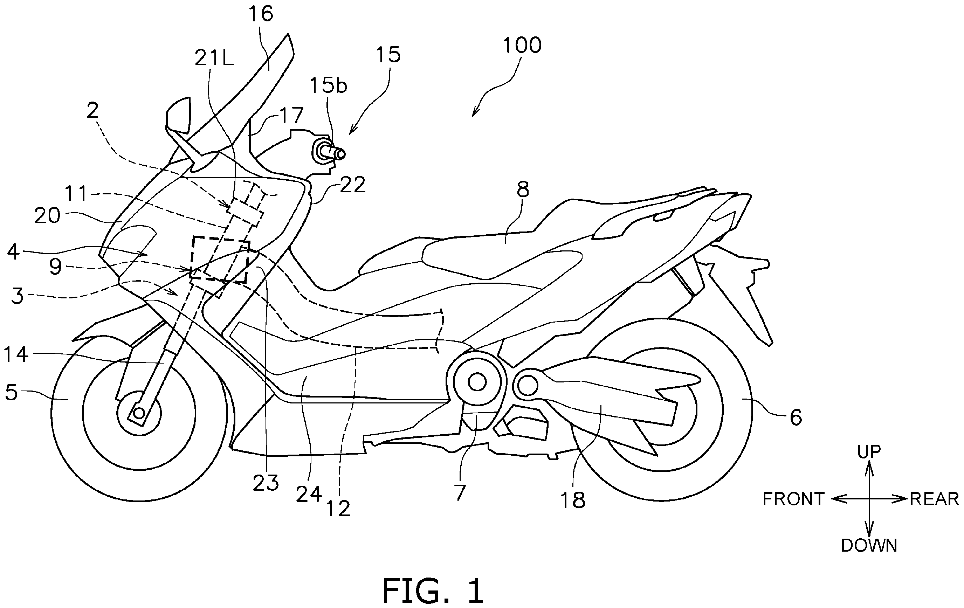

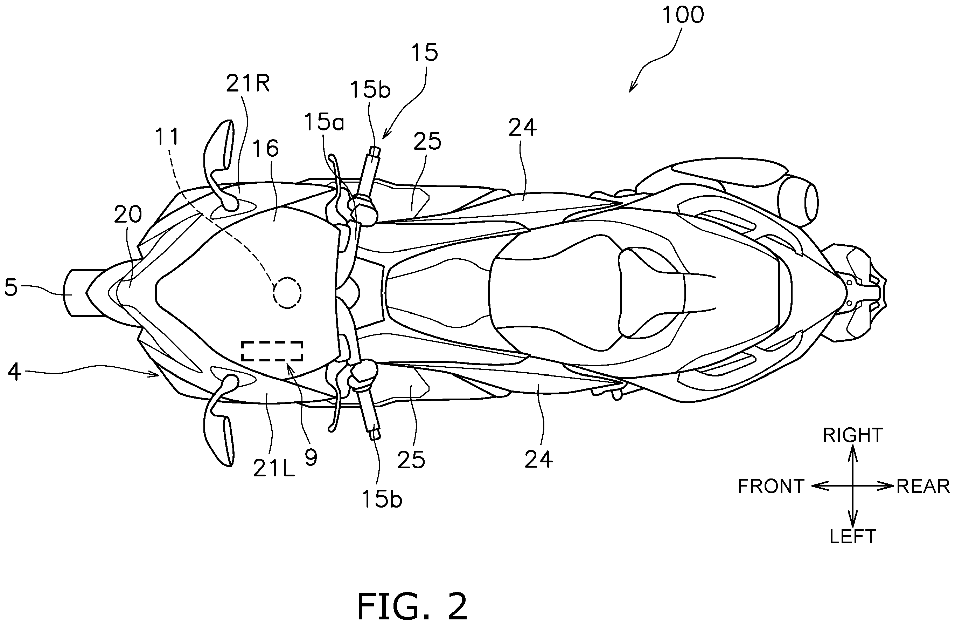

FIG. 1 is a left side view of the straddled vehicle 100. FIG. 2 is a top view of the straddled vehicle 100. The straddled vehicle 100 is a scooter. The straddled vehicle 100 includes a vehicle body frame 2, a steering device 3, a vehicle body cover 4, a front wheel 5, a rear wheel 6, an engine 7, and a seat 8.

The vehicle body frame 2 includes a head pipe 11 and a main frame 12. The head pipe 11 extends forward and downward. The head pipe 11 is disposed in the center of the straddled vehicle 100 in the vehicle width direction.

The main frame 12 is connected at the front end thereof to the head pipe 11. The main frame 12 extends backward from the head pipe 11, while branching therefrom into right and left portions. It should be noted that the term "connection" is not limited to direct connection and encompasses indirect connection. Besides, the term "connection" is not limited to a condition that separate members are fixed to each other and encompasses a condition that a plurality of portions in an integrated member continue to each other.

The steering device 3 is supported by the head pipe 11 so as to be turnable. The steering device 3 includes a front fork 14 and a handle portion 15. The front fork 14 extends forward and downward. The front fork 14 is connected at the lower end thereof to the front wheel 5. The handle portion 15 is connected to the front fork 14. The handle portion 15 includes a handlebar 15a extending in a right-and-left direction and grip portions 15b provided on both the ends of the handlebar 15a. A wind shield 16 is disposed in front of the handle portion 15. A meter unit 17, displaying vehicle speed and so forth, is disposed between the handle portion 15 and the wind shield 16.

The vehicle body cover 4 covers the vehicle body frame 2. The vehicle body cover 4 includes a front cover 20, exterior covers 21L and 21R, a backside cover 22, a leg shield 23, and a side cover 24. The front cover 20 is disposed in front of the head pipe 11 and covers the head pipe 11 from front. Each exterior cover 21L, 21R covers the head pipe 11 from one lateral side. The exterior cover 21L covers the head pipe 11 from a left lateral side. The exterior cover 21R covers the head pipe 11 from a right lateral side. Each exterior cover 21L, 21R is connected to the front cover 20. Each exterior cover 21L, 21R extends backward from the front cover 20. In the preferred embodiment shown in the drawings, each exterior cover 21L, 21R is integrated with the front cover 20. It should be noted that each exterior cover 21L, 21R may be separated from the front cover 20.

The backside cover 22 is disposed behind the head pipe 11 and covers the head pipe 11 from behind. The leg shield 23 is disposed on the right and left of the backside cover 22. A pair of right and left footrests 25 is disposed on lower portions of the leg shield 23. The side cover 24 laterally covers the main frame 12 from outer sides in the vehicle width direction. The side cover 24 extends backward from the leg shield 23.

The front wheel 5 is supported by the front fork 14 so as to be rotatable. The rear wheel 6 is supported by a swing arm 18 disposed behind the engine 7 so as to be rotatable.

The engine 7 is disposed directly below the seat 8. The engine 7 is supported by the vehicle body frame 2. In the present preferred embodiment, the engine 7 is supported by the main frame 12.

The seat 8 is disposed behind the backside cover 22. The seat 8 is disposed directly above the main frame 12 and the side cover 24. The seat 8 extends in a vehicle back-and-forth direction.

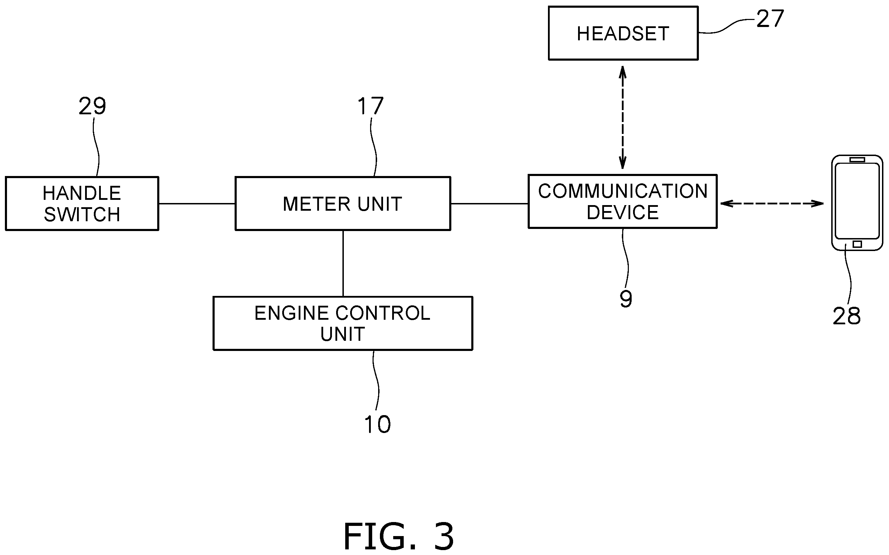

As shown in FIG. 3, the straddled vehicle 100 includes a communication device 9 and an engine control unit 10 controlling the engine 7. FIG. 3 is a block diagram for explaining devices to be connected to the communication device 9. The communication device 9 is connected to the meter unit 17. For example, the communication device 9 records traveling data of the straddled vehicle 100. The communication device 9 is communicable with a headset 27 over wireless communication. The communication device 9 is communicable with a portable communication terminal 28 (e.g., smart phone) over wireless communication and/or wired communication. The traveling data recorded by the communication device 9 can be checked through a dedicated application or so forth installed in the portable communication terminal 28. The meter unit 17 is connected to the engine control unit 10 and a handle switch 29 provided on the handle portion 15.

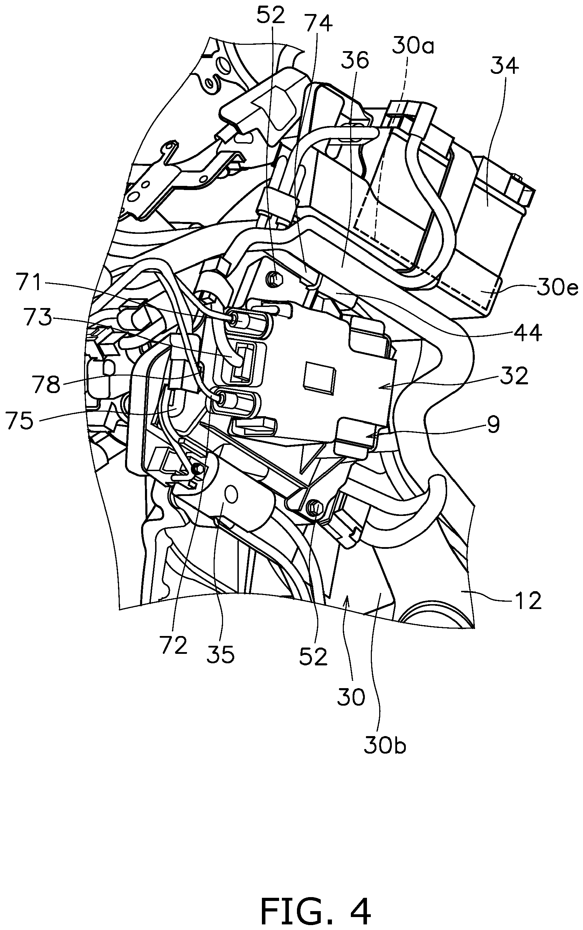

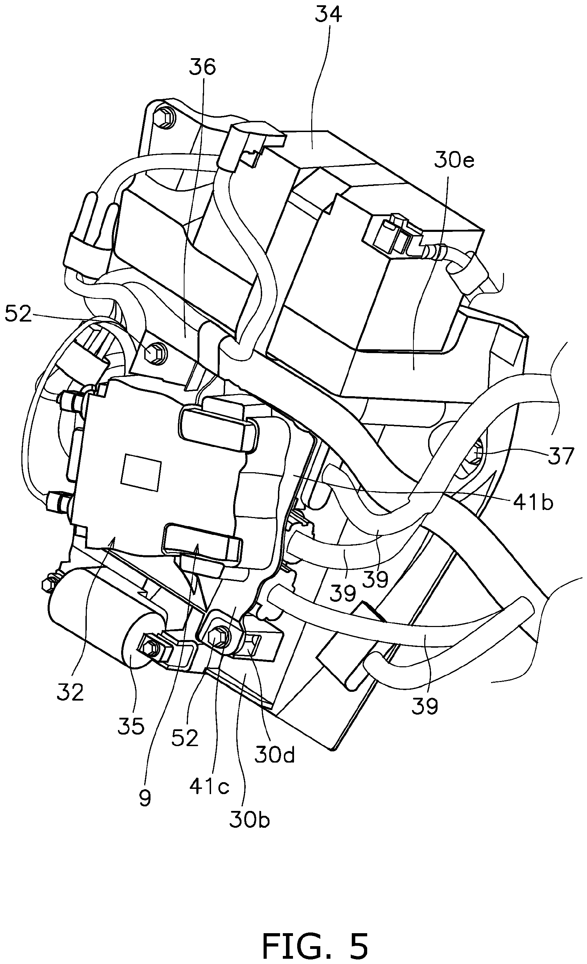

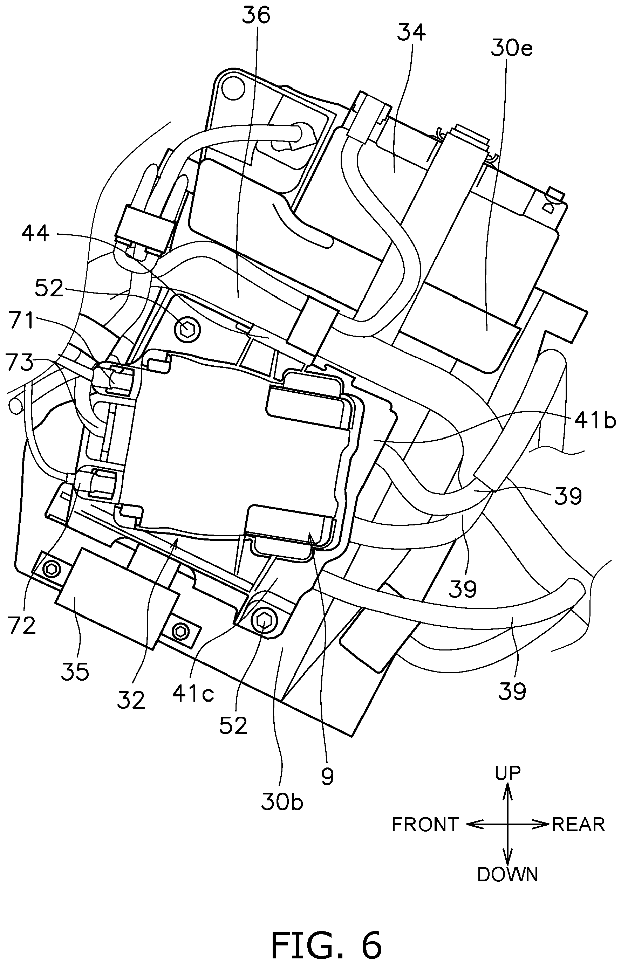

FIG. 4 is a perspective view of the communication device 9 and the surroundings thereof as seen from front in a condition that the vehicle body cover 4 is detached from the straddled vehicle 100. FIG. 5 is a perspective view of the communication device 9 and the surroundings thereof as seen from behind in the condition that the vehicle body cover 4 is detached from the straddled vehicle 100. FIG. 6 is a side view of the communication device 9 and the surroundings thereof as seen from the left lateral side in the condition that the vehicle body cover 4 is detached from the straddled vehicle 100. As shown in FIGS. 4 to 6, the straddled vehicle 100 includes a support member 30, a holder 32, a battery 34, and a main harness 36.

The support member 30 is made of resin. The support member 30 is disposed inside the exterior cover 21L. The support member 30 is disposed on the left side of the center of the vehicle in the vehicle width direction. The support member 30 is disposed on the outer side of the vehicle body frame 2 in the vehicle width direction. The support member 30 is fixed to the vehicle body frame 2 from the outer side in the vehicle width direction. As shown in FIG. 5, the support member 30 is fixed to the main frame 12 by fastening a bolt 37. An ignition coil 35 is fixed to the support member 30. The ignition coil 35 is disposed directly below the communication device 9 and the engine control unit 10.

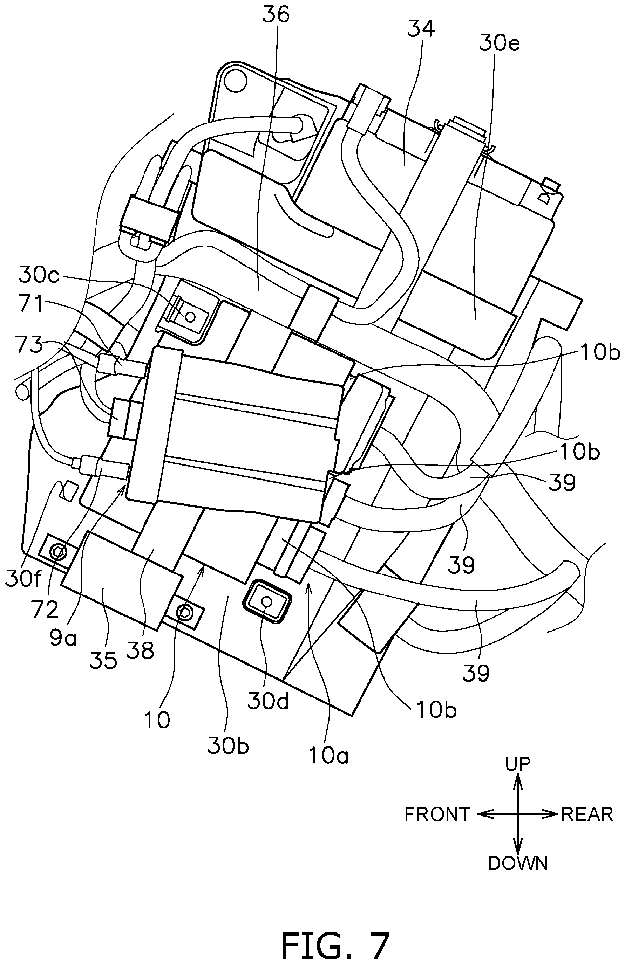

The support member 30 includes a mount portion 30a, a holding portion 30b, and fixation portions 30c and 30d (see FIG. 7). The mount portion 30a is a portion to which the battery 34 is mounted. The mount portion 30a extends in the vehicle width direction and the vehicle back-and-forth direction. As seen in a vehicle plan view, the mount portion 30a is made in substantially the shape of a rectangle. The mount portion 30a is provided with a wall portion 30e extending in an up-and-down direction to enclose portion of lateral faces of the battery 34.

The holding portion 30b extends downward from the vehicle-width-directionally inner-side end of the mount portion 30a. The holding portion 30b is made in the shape of a plate. The lower end of the holding portion 30b is located on the inner side of the vehicle-width-directionally outer-side end of the mount portion 30a in the vehicle width direction. The holding portion 30b serves to hold the engine control unit 10.

The fixation portions 30c and 30d are holes into which bolts 52 are inserted, respectively. As shown in FIG. 5, the fixation portions 30c and 30d are disposed on the outer side of the holding portion 30b in the vehicle width direction. The fixation portion 30d is disposed below and backward of the fixation portion 30c.

Main harness 36 is a bundle of a plurality of electric cables. A portion of the main harness 36, located below the mount portion 30a, extends in the vehicle back-and-forth direction.

FIG. 7 is a side view of the communication device 9 and the surroundings thereof as seen from the left lateral side in a condition that the vehicle body cover 4 and holder 32 are detached from the straddled vehicle 100. As seen in the vehicle side view, the engine control unit 10 is made in substantially the shape of a rectangle. The engine control unit 10 is disposed between the communication device 9 and the support member 30. The engine control unit 10 is disposed on the inner side of the communication device 9 in the vehicle width direction. The engine control unit 10 is smaller in a dimension corresponding to the vehicle width direction than in each of dimensions corresponding to the vehicle back-and-forth direction and the vehicle up-and-down direction. A thickness direction of the engine control unit 10 corresponds to the vehicle width direction. The engine control unit 10 is positioned such that the upper and lower ends thereof are downwardly tilted with respect to a front-to-rear direction. The engine control unit 10 is also positioned such that the front and rear ends thereof are forwardly tilted with respect to an up-to-down direction.

The engine control unit 10 is held against the holding portion 30b by, for instance, a rubber band 38 attached to the holding portion 30b, on the outer side of the holding portion 30b in the vehicle width direction. The rubber band 38 is attached to the holding portion 30b, while traversing the engine control unit 10 in the vehicle up-and-down direction. The rubber band 38 presses the engine control unit 10 against the holding portion 30b.

The engine control unit 10 includes a first connector portion 10a. The first connector portion 10a faces a different direction from the vehicle width direction. In the present preferred embodiment, the first connector portion 10a faces behind the vehicle. The first connector portion 10a includes a plurality of female terminals 10b. Electric cables 39, branching from the main harness 36, are inserted into the female terminals 10b, respectively.

The communication device 9 is disposed between the exterior cover 21L and the support member 30. The communication device 9 is disposed between the engine control unit 10 and the exterior cover 21L. As seen in the vehicle side view, the communication device 9 overlaps the engine control unit 10. As seen in a vehicle plan view, the communication device 9 does not overlap the engine control unit 10. The communication device 9 is disposed away from the engine control unit 10 in the vehicle width direction. As seen in the vehicle side view, the communication device 9 is made in substantially the shape of a rectangle. The communication device 9 is smaller in a dimension corresponding to the vehicle width direction than in each of dimensions corresponding to the vehicle back-and-forth direction and the vehicle up-and-down direction. A thickness direction of the communication device 9 corresponds to the vehicle width direction.

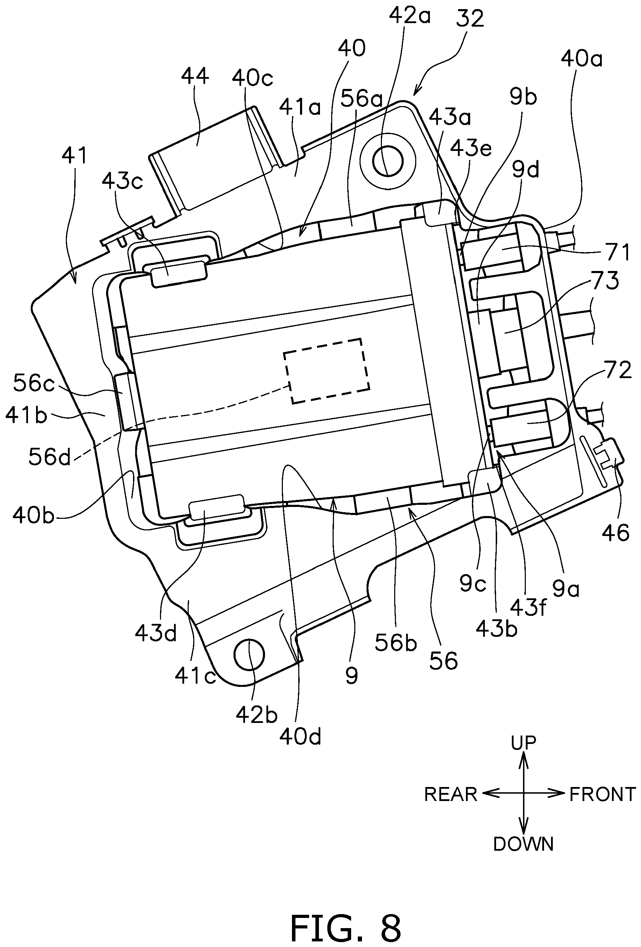

FIG. 8 is a view of the communication device 9 and the holder 32 as seen from the inner side in the vehicle width direction. The communication device 9 includes a second connector portion 9a. The second connector portion 9a faces a different direction from the vehicle width direction. Preferably, the second connector portion 9a faces an opposite direction to the direction that the first connector portion 10a faces. In the present preferred embodiment, the second connector portion 9a faces ahead of the vehicle. The second connector portion 9a includes male terminals 9b and 9c and a female terminal 9d. An electric cable 71 for LVDS (Low Voltage Differential Signalling) is plugged onto the male terminal 9b. An electric cable 72, connected to a USB socket (not shown in the drawings), is plugged onto the male terminal 9c. An electric cable 73, branching from the main harness 36, is plugged into the female terminal 9d.

The holder 32 is made of resin. The holder 32 holds the communication device 9. The holder 32 is disposed inside the exterior cover 21L. The holder 32 is fixed to the support member 30 so as to cover the surroundings of the communication device 9 from the outer side in the vehicle width direction. The holder 32 has an opening facing the inner side in the vehicle width direction. The holder 32 covers the first connector portion 10a from the outer side in the vehicle width direction.

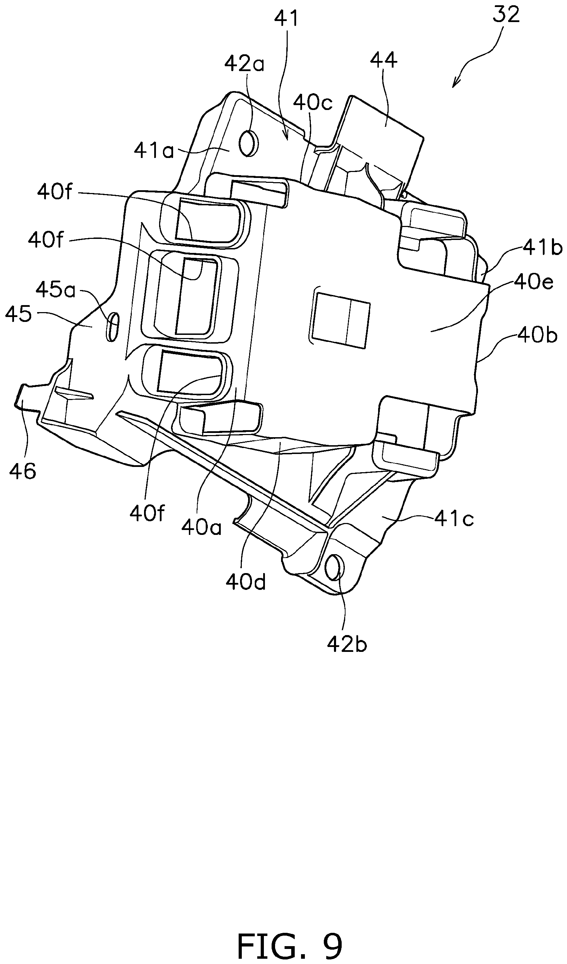

FIG. 9 is a perspective view of the holder 32. As shown in FIGS. 8 and 9, the holder 32 includes an accommodation portion 40, a flange portion 41, fixation portions 42a and 42b, presser portions 43a to 43f, a guide portion 44, a sidewall 45, and an engaging pawl 46.

The accommodation portion 40 accommodates the communication device 9. The accommodation portion 40 has an opening facing the inner side in the vehicle width direction. The accommodation portion 40 is shaped to bulge from the inner side to the outer side in the vehicle width direction. As seen in the vehicle side view, the accommodation portion 40 is made in substantially the shape of a rectangle. The accommodation portion 40 includes a front surface portion 40a, a rear surface portion 40b, an upper surface portion 40c, a lower surface portion 40d, and a lateral surface portion 40e.

The front and rear surface portions 40a and 40b, each extending in both the vehicle width direction and the vehicle up-and-down direction, are opposed to each other. The front surface portion 40a is provided with a plurality of holes 40f, whereby electric cables 71 to 73 are enabled to pass therethrough to be plugged into and onto the communication device 9. The holes 40f are opened forward. The holes 40f are disposed closer to the vehicle front than male terminals 9b and 9c and female terminal 9d of the second connector portion 9a. Because of this, when the electric cable 71 to 73 are unplugged from the male terminals 9b and 9c and the female terminal 9d, the holder 32 is required to be detached from the support member 30. In other words, this structure prevents the electric cables 71 to 73 from being unplugged from outside while the holder 32 is fixed to the support member 30. It should be noted that as shown in FIG. 5, connectors of the electric cables 71 to 73, plugged onto and into the male terminals 9b and 9c and the female terminal 9d, are exposed to the outside from the holder 32. Accordingly, increase in size of the holder 32 can be inhibited.

The upper and lower surface portions 40c and 40d, each extending in both the vehicle width direction and the vehicle back-and-forth direction, are opposed to each other. The lateral surface portion 40e is connected to the vehicle-width-directionally outer-side end of the front surface portion 40a, that of the rear surface portion 40b, that of the upper surface portion 40c, and that of the lower surface portion 40d. The lateral surface portion 40e extends in both the vehicle up-and-down direction and the vehicle back-and-forth direction. The lateral surface portion 40e is provided with openings in a rear portion thereof, whereby a portion of the communication device 9 is exposed.

The flange portion 41 is disposed on the inner side of the accommodation portion 40 in the vehicle width direction. The flange portion 41 is disposed on the inner side of the communication device 9 in the vehicle width direction. The flange portion 41 includes an upper flange portion 41a, a rear flange portion 41b, and a lower flange portion 41c. The upper flange portion 41a upwardly extends from the upper surface portion 40c. The rear flange portion 41b backwardly extends from the rear surface portion 40b. The lower flange portion 41c downwardly extends from the lower surface portion 40d. In the present preferred embodiment, as shown in FIGS. 5 and 6, the plural female terminals 10b of the first connector portion 10a are covered with the rear and lower flange portions 41b and 41c from the outer side in the vehicle width direction. Because of this, when electric cables 39 are unplugged from the female terminals 10b, the holder 32 is required to be detached from the support member 30. It should be noted that the plural female terminals 10b of the first connector portion 10a may be covered with the accommodation portion 40 from the outer side in the vehicle width direction.

The fixation portions 42a and 42b are holes into which the bolts 52 are inserted, respectively. The fixation portions 42a and 42b are fixed to the support member 30 by fastening the bolts 52. The fixation portions 42a and 42b are provided in the flange portion 41. The fixation portion 42a is provided in upper flange portion 41a. The fixation portion 42b is provided in lower flange portion 41c. The fixation portion 42b is disposed below and backward of the fixation portion 42a.

The presser portions 43a to 43f prevent the communication device 9 from coming off from the holder 32. When described in detail, the presser portions 43a to 43f prevent the communication device 9 from coming off from the accommodation portion 40. The presser portions 43a to 43d are disposed on the inner side of the lateral surface portion 40e in the vehicle width direction, while overlapping the lateral surface portion 40e in the vehicle width direction. The presser portions 43a to 43d make contact with a lateral surface, facing the vehicle-width-directionally inner side, of the communication device 9. The presser portions 43a and 43b prevent a front portion of the communication device 9 from coming off from the accommodation portion 40. The presser portions 43a and 43b are each made in the shape of a plate. The presser portion 43a is provided in the vicinity of a boundary between the front surface portion 40a and the upper surface portion 40c. The presser portion 43b is provided in the vicinity of a boundary between the front surface portion 40a and the lower surface portion 40d. The presser portions 43c and 43d interpose a rear portion of the communication device 9 therebetween in the up-and-down direction. The presser portions 43c and 43d are each made in the shape of a pawl and prevent the rear portion of the communication device 9 from coming off from the accommodation portion 40. The presser portion 43c is provided in an adjacent position to the upper surface portion 40c. The presser portion 43d is provided in an adjacent position to the lower surface portion 40d.

The presser portions 43e and 43f backwardly protrude from the inner surface of the front surface portion 40a. The presser portions 43e and 43f make contact with the front surface of the communication device 9. The presser portion 43e is disposed away from the presser portion 43f in the vehicle up-and-down direction.

The straddled vehicle 100 herein includes at least one shock absorbing material 56. The at least one shock absorbing material 56 is disposed between the communication device 9 and the holder 32. The at least one shock absorbing material 56 inhibits vibration transferred from the holder 32 to the communication device 9. The at least one shock absorbing material 56 is made of a cushioning material such as sponge or an elastic material such as rubber. In the present preferred embodiment, four shock absorbing materials 56a to 56d are provided between the communication device 9 and the holder 32.

The shock absorbing material 56a is disposed between the upper surface portion 40c and the upper surface of the communication device 9. The shock absorbing material 56b is disposed between the lower surface portion 40d and the lower surface of the communication device 9. The shock absorbing material 56c is disposed between the rear surface portion 40b and the rear surface of the communication device 9. The shock absorbing material 56d is disposed between the lateral surface portion 40e and a lateral surface, facing the vehicle-width-directionally outer side, of the communication device 9. With this configuration, while the communication device 9 is accommodated in the accommodation portion 40, the rear surface portion 40b, the upper surface portion 40c, the lower surface portion 40d, and the lateral surface portion 40e make contact with the communication device 9 through the shock absorbing materials 56. In other words, the communication device 9 is disposed away from the front surface portion 40a, the rear surface portion 40b, the upper surface portion 40c, the lower surface portion 40d, and the lateral surface portion 40e.

The guide portion 44 guides electric cables disposed about the holder 32. The guide portion 44 upwardly extends from the upper flange portion 41a. The guide portion 44 is made in the shape of a plate. For example, the guide portion 44 restricts the main harness 36 from moving to the inner side in the vehicle width direction. Besides in the present preferred embodiment, as shown in FIG. 4, the guide portion 44 separates an electric cable 74 connected to a starter motor (not shown in the drawings) and the main harness 36 so as to prevent friction from occurring therebetween.

The sidewall 45 is connected to the front surface portion 40a. The sidewall 45 extends from the front surface portion 40a to the further inner side in the vehicle width direction. The sidewall 45 is provided with a hole 45a for fixing an electric cable disposed about the holder 32 by a clamp 78. In the present preferred embodiment, as shown in FIG. 4, an electric cable 75 connected to the handle switch 29 is fixed by the clamp 78.

The engaging pawl 46 extends from the sidewall 45 to the further inner side in the vehicle width direction and extends forward at the distal end thereof. The engaging pawl 46 is engaged with an engaging hole 30f provided in the holding portion 30b of the support member 30 as shown in FIG. 7. While the engaging pawl 46 is engaged with the engaging hole 30f, the fixation portions 42a and 42b are fixed to the support member 30 by fastening the bolts 52.

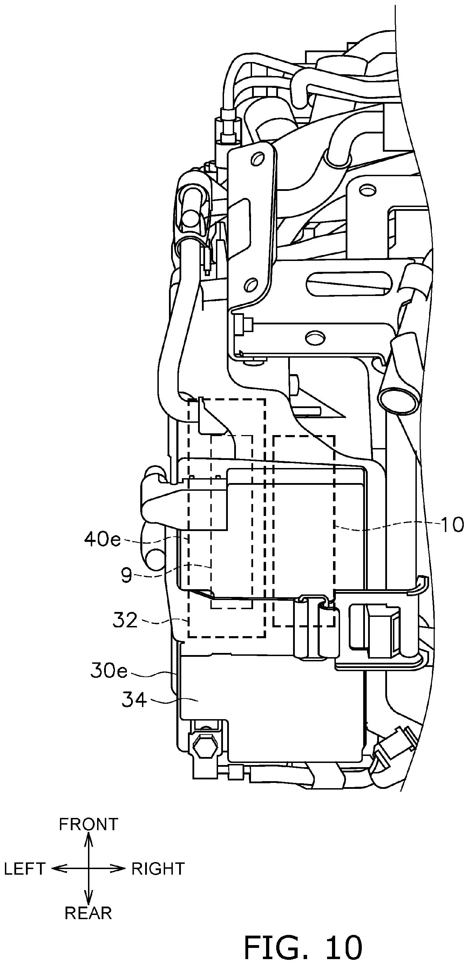

FIG. 10 is a top view of the battery 34 and the surroundings thereof in a condition that the vehicle body cover 4 is detached from the straddled vehicle 100. As shown in FIG. 10, the battery 34 is disposed to overlap the holder 32 in a vehicle plan view. As seen in the vehicle plan view, the battery 34 overlaps the communication device 9 and the engine control unit 10. The mount portion 30a of the support member 30 extends to the outer side of the holder 32 in the vehicle width direction. As seen in the vehicle plan view, the lateral surface portion 40e of the accommodation portion 40 is located on the inner side of the vehicle-width-directionally outermost end of the wall portion 30e in the vehicle width direction.

In the straddled vehicle 100 according to the preferred embodiment described above, the communication device 9 and the engine control unit 10 are each smaller in the dimension corresponding to the vehicle width direction than in each of the dimensions corresponding to the vehicle back-and-forth direction and the vehicle up-and-down direction, and the communication device 9 overlaps the engine control unit 10 as seen in the vehicle side view. Besides, the holder 32 has the opening facing the inner side in the vehicle width direction. Hence, the communication device 9 can be disposed in a position closer to the center of the vehicle in the vehicle width direction. Because of this, even when the communication device 9 and the engine control unit 10 are disposed to overlap each other in the vehicle width direction, the vehicle can be made compact in size. Moreover, the holder 32 is fixed to the support member 30 inside the exterior cover 21L so as to cover the surroundings of the communication device 9. Hence, the communication device 9 can be enhanced in theft prevention performance. Furthermore, the engine control unit 10 is disposed between the communication device 9 and the support member 30. Hence, the engine control unit 10 can be enhanced in theft prevention performance. Still furthermore, the engine control unit 10, having relatively heavy weight, is disposed in the position closer to the center of the vehicle than the communication device 9 in the vehicle width direction. Hence, the vehicle is enhanced in stability during travelling.

The holder 32 covers the first connector portion 10a from the outer side in the vehicle width direction. Hence, the electric cables 39, connected to the first connector portion 10a, are prevented from being easily disconnected therefrom by external work. Accordingly, the engine control unit 10 is further enhanced in theft prevention performance. Besides, the second connector portion 9a of the communication device 9 is oriented in the opposite direction to the first connector portion 10a. Hence, wiring work is made easy at the first connector portion 10a and the second connector portion 9a.

The communication device 9 is held by the presser portions 43a to 43f of the holder 32 made of resin not by those of a metallic member. Hence, the communication device 9 can be maintained in a good communication status.

One preferred embodiment of the present invention has been explained above. However, the present invention is not limited to the preferred embodiment described above, and a variety of changes can be made.

The straddled vehicle 100 is not limited to the disclosed scooter, and alternatively, may be another type of straddled vehicle. The vehicle body frame 2, the vehicle body cover 4, and the support member 30 may be changed in structure.

In the preferred embodiment described above, the support member 30 is disposed inside the exterior cover 21L. However, the support member 30 may be disposed inside the exterior cover 21R. In other words, the communication device 9 and the engine control unit 10 may be disposed on the right side of the center of the vehicle in the vehicle width direction.

The presser portions 43a to 43f may be changed in shape and/or layout. The at least one shock absorbing material 56 may be changed in shape and/or layout.

It will be appreciated that the embodiment of the present invention hereinbefore described is given by way of example only, and is not intended to limit the scope of the invention in any way.

It will be appreciated that the term "straddled vehicle" or "straddled motor vehicle" used herein, and as used in the art, is meant to include at least the following terms also used in the art:
straddled vehicle or straddled motor vehicle, straddle-type vehicle or straddle-type motor vehicle, saddle-straddling type vehicle or saddle-straddling type motor vehicle, and includes: motorcycles and motorbikes, as well as motor tricycles, quad bikes and straddled All Terrain Vehicles (ATVs), scooters, mopeds and straddled snowmobiles.

## Claims

1. A straddled vehicle (100) comprising:
a vehicle body frame (2) comprising a head pipe (11);
an engine (7) supported by the vehicle body frame;
an exterior cover (21L, 21R) covering the head pipe from one lateral side;
a support member (30) made of resin, the support member disposed inside the exterior cover, the support member fixed to the vehicle body frame;
a communication device (9) disposed between the exterior cover and the support member, the communication device communicable with a portable communication terminal (28);
a holder (32) made of resin, the holder comprising an opening facing an inner side in a vehicle width direction, the holder fixed to the support member inside the exterior cover so as to cover surroundings of the communication device, the holder holding the communication device; and
an engine control unit (10) disposed between the communication device and the support member, the engine control unit controlling the engine, wherein
the communication device and the engine control unit are each smaller in a dimension corresponding to the vehicle width direction than in each of dimensions corresponding to a vehicle back-and-forth direction and a vehicle up-and-down direction, and
the communication device overlaps the engine control unit as seen in a vehicle side view.

2. The straddled vehicle according to claim 1, wherein
the engine control unit comprises a first connector portion (10a) oriented in a direction different from the vehicle width direction, and
the holder covers the first connector portion from an outer side in the vehicle width direction.

3. The straddled vehicle according to claim 2, wherein the communication device further comprises a second connector portion oriented in a direction opposite to the direction in which the first connector portion is oriented.

4. The straddled vehicle according to any one of claims 1 to 3, wherein the holder comprises a plurality of presser portions (42a-43f) preventing the communication device from coming off from the opening.

5. The straddled vehicle according to any one of claims 1 to 4, further comprising:
at least one shock absorbing material (56) disposed between the communication device and the holder, the at least one shock absorbing material inhibiting vibration transferred from the holder to the communication device.

6. The straddled vehicle according to any one of claims 1 to 5, wherein the holder further comprises a guide portion (44) guiding an electric cable disposed about the holder.

7. The straddled vehicle according to any one of claims 1 to 6, wherein
the holder comprises a sidewall (45) extending in the vehicle width direction, and
the sidewall is provided with a hole (45a) for fixing an electric cable disposed about the holder by a clamp (78).

8. The straddled vehicle according to any one of claims 1 to 7, further comprising:
a battery (34) disposed to overlap the holder as seen in a vehicle plan view, wherein
the support member comprises a mount portion (30a) to which the battery is mounted.

## Patentansprüche

1. Grätschsitzfahrzeug (100), umfassend:
einen Fahrzeugkarosserierahmen (2), umfassend ein Kopfrohr (11);
einen Motor (7), der von dem Fahrzeugkarosserierahmen getragen wird;
eine äußere Abdeckung (21L, 21R), die das Kopfrohr von einer lateralen Seite abdeckt,
ein aus Harz bestehendes Trägerelement (30), wobei das Trägerelement innerhalb der äußeren Abdeckung angeordnet ist, wobei das Trägerelement am Fahrzeugkarosserierahmen befestigt ist,
eine Kommunikationsvorrichtung (9), die zwischen der äußeren Abdeckung und dem Trägerelement angeordnet ist, wobei die Kommunikationsvorrichtung mit einem tragbaren Kommunikationsendgerät (28) kommunizieren kann;
eine aus Harz bestehende Halterung (32), wobei die Halterung eine Öffnung umfasst, die einer Innenseite in einer Fahrzeugbreitenrichtung zugewandt ist, wobei die Halterung an dem Trägerelement innerhalb der äußeren Abdeckung so befestigt ist, dass sie die Umgebung der Kommunikationsvorrichtung abdeckt, wobei die Halterung die Kommunikationsvorrichtung hält; und
eine Motorsteuereinheit (10), welche zwischen der Kommunikationsvorrichtung und dem Trägerelement angeordnet ist, wobei die Motorsteuereinheit den Motor steuert, wobei
die Kommunikationsvorrichtung und die Motorsteuereinheit jeweils in einer Dimension, die der Fahrzeugbreitenrichtung entspricht, kleiner sind als in jeder der Dimensionen, die einer Fahrzeugrück- und -vorwärtsrichtung und einer Fahrzeugauf- und -abwärtsrichtung entsprechen, und
die Kommunikationseinrichtung die Motorsteuereinheit in einer Seitenansicht des Fahrzeugs überlappt.

2. Grätschsitzfahrzeug nach Anspruch 1, wobei
die Motorsteuereinheit einen ersten Verbindungsabschnitt (10a) umfasst, der in einer Richtung ausgerichtet ist, die sich von der Fahrzeugbreitenrichtung unterscheidet, und
die Halterung den ersten Verbindungsabschnitt von einer Außenseite in der Fahrzeugbreitenrichtung abdeckt.

3. Grätschsitzfahrzeug nach Anspruch 2, wobei die Kommunikationsvorrichtung ferner einen zweiten Verbindungsabschnitt umfasst, der in einer Richtung entgegengesetzt zu der Richtung ausgerichtet ist, in der der erste Verbindungsabschnitt ausgerichtet ist.

4. Grätschsitzfahrzeug nach einem der Ansprüche 1 bis 3, wobei die Halterung eine Vielzahl von Druckteilen (42a-43f) umfasst, die verhindern, dass sich die Kommunikationsvorrichtung aus der Öffnung löst.

5. Grätschsitzfahrzeug nach einem der Ansprüche 1 bis 4, ferner umfassend:
mindestens ein stoßdämpfendes Material (56), das zwischen der Kommunikationsvorrichtung und der Halterung angeordnet ist, wobei das mindestens eine stoßdämpfende Material die Übertragung von Vibrationen von der Halterung auf die Kommunikationsvorrichtung verhindert.

6. Grätschsitzfahrzeug nach einem der Ansprüche 1 bis 5, wobei die Halterung ferner einen Führungsabschnitt (44) umfasst, der ein um die Halterung herum angeordnetes elektrisches Kabel führt.

7. Grätschsitzfahrzeug nach einem der Ansprüche 1 bis 6, wobei
die Halterung eine Seitenwand (45) umfasst, die sich in der Fahrzeugbreitenrichtung erstreckt, und
die Seitenwand mit einem Loch (45a) zum Befestigen eines um die Halterung herum angeordneten elektrischen Kabels mittels einer Klemme (78) versehen ist.

8. Grätschsitzfahrzeug nach einem der Ansprüche 1 bis 7, ferner umfassend:
eine Batterie (34), welche derart angeordnet ist, dass sie die Halterung in einer Draufsicht auf das Fahrzeug überlappt, wobei
das Trägerelement einen Montageabschnitt (30a) umfasst, an dem die Batterie montiert ist.

## Revendications

1. Véhicule à enfourcher (100) comprenant :
un cadre de carrosserie de véhicule (2) comprenant un tube de tête (11),
un moteur (7) supporté par le cadre de carrosserie de véhicule,
un couvercle extérieur (21L, 21R) recouvrant le tube de tête à partir d'un côté latéral,
un élément de support (30) constitué de résine, l'élément de support étant disposé à l'intérieur du couvercle extérieur, l'élément de support étant fixé au cadre de carrosserie de véhicule,
un dispositif de communication (9) disposé entre le couvercle extérieur et l'élément de support, le dispositif de communication pouvant communiquer avec un terminal de communication portable (28),
un support (32) constitué de résine, le support comprenant une ouverture orientée vers un côté intérieur dans une direction de largeur du véhicule, le support étant fixé à l'élément de support à l'intérieur du couvercle extérieur de façon à recouvrir les environs du dispositif de communication, le support supportant le dispositif de communication, et
une unité de commande de moteur (10) disposée entre le dispositif de communication et l'élément de support, l'unité de commande de moteur commandant le moteur, dans lequel
le dispositif de communication et l'unité de commande de moteur ont chacun une dimension correspondant à la direction de largeur du véhicule qui est inférieure à chacune des dimensions correspondant à une direction d'avant en arrière du véhicule et une direction de haut en bas du véhicule, et
le dispositif de communication chevauche l'unité de commande de moteur dans une vue latérale du véhicule.

2. Véhicule à enfourcher selon la revendication 1, dans lequel
l'unité de commande de moteur comprend une première partie de connecteur (10a) orientée dans une direction différente de la direction de largeur du véhicule, et
le support recouvre la première partie de connecteur à partir d'un côté extérieur dans la direction de largeur du véhicule.

3. Véhicule à enfourcher selon la revendication 2, dans lequel le dispositif de communication comprend en outre une deuxième partie de connecteur orientée dans une direction opposée à la direction dans laquelle la première partie de connecteur est orientée.

4. Véhicule à enfourcher selon l'une quelconque des revendications 1 à 3, dans lequel le support comprend une pluralité de parties d'élément presseur (42a-43f) empêchant le dispositif de communication de se détacher de l'ouverture.

5. Véhicule à enfourcher selon l'une quelconque des revendications 1 à 4, comprenant en outre :
au moins un matériau absorbant les chocs (56) disposé entre le dispositif de communication et le support, l'au moins un matériau absorbant les chocs empêchant la transmission des vibrations du support au dispositif de communication.

6. Véhicule à enfourcher selon l'une quelconque des revendications 1 à 5, dans lequel le support comprend en outre une partie de guide (44) guidant un câble électrique disposé autour du support.

7. Véhicule à enfourcher selon l'une quelconque des revendications 1 à 6, dans lequel
le support comprend une paroi latérale (45) s'étendant dans la direction de largeur du véhicule, et
la paroi latérale est dotée d'un trou (45a) pour fixer un câble électrique disposé autour du support par une attache (78).

8. Véhicule à enfourcher selon l'une quelconque des revendications 1 à 7, comprenant en outre :
une batterie (34) disposée pour chevaucher le support dans une vue en plan du véhicule, dans lequel
l'élément de support comprend une partie de montage (30a) sur laquelle la batterie est montée.
